(19) Europäisches Patentamt
European Patent Office
Office européen des brevets

(11) **EP 2 628 392 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **12155389.5**

(22) Anmeldetag: **14.02.2012**

(51) Int Cl.:
*A22C 17/00* (2006.01)  *B26D 1/06* (2006.01)
*B26D 1/12* (2006.01)  *B26D 1/22* (2006.01)
*B26D 1/46* (2006.01)  *B26D 1/547* (2006.01)
*B26D 1/60* (2006.01)  *B26D 5/00* (2006.01)
*B26D 5/14* (2006.01)  *B26D 7/06* (2006.01)
*B26D 7/32* (2006.01)

(54) **Verfahren und Vorrichtung zum Trennen von Produkten**

Method and device for dividing products

Procédé et dispositif destinés à la division de produits

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.08.2013 Patentblatt 2013/34**

(73) Patentinhaber: **Albert Handtmann Maschinenfabrik GmbH & Co. KG 88400 Biberach (DE)**

(72) Erfinder:
• **Baechtle, Manfred 88433 Schemmerhofen (DE)**
• **Braig, Wolfgang 88471 Laupheim-Obersulmetingen (DE)**
• **Reutter, Siegfried 88436 Eberhardzell (DE)**

• **Romer, Bernd 88524 Offingen (DE)**
• **Schmid, Klaus 88499 Riedlingen (DE)**
• **Teufel, Daniel 88433 Schemmerhofen (DE)**

(74) Vertreter: **Grünecker Patent- und Rechtsanwälte PartG mbB Leopoldstraße 4 80802 München (DE)**

(56) Entgegenhaltungen:
**EP-A1- 0 429 711    WO-A1-00/13864
FR-A- 1 462 606    GB-A- 2 377 362
US-A1- 2009 238 662**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Trennen von Lebensmittelprodukten sowie eine Vorrichtung zum Durchführen des Verfahrens.

Das Trennen von hüllenlosen Lebensmittelprodukten erfolgt oftmals auf Transporteinrichtungen, insbesondere Transportbändern, die einer Füllmaschine oder aber einem Füllstromteiler nachgeschaltet sind. Die Lebensmittelprodukte werden dabei dem Trennelement ein- oder mehrbahnig zugeführt.

Dabei sind bereits unterschiedliche Trennverfahren bekannt. Um einen geraden Schnitt zu erzielen, wird das Transportband oftmals beim Durchtrennen des Strangs gestoppt. Die Stoppzeiten sind jedoch nachteilig, da der Produktfluss bei jedem Trennvorgang unterbrochen werden muss um einen geraden Schnitt zu erzeugen.

Es gibt auch Maschinen, bei denen der Produktstrom aus diesem Grund nicht gestoppt wird und das Trennelement sich so schnell wie möglich durch den Strang bewegt. Je höher das zu trennende Produkt ist, desto "schräger" erfolgt hier der Schnitt, da das Produkt sich horizontal immer bewegt und es nicht möglich ist, die Vertikalbewegung des Messers unendlich klein zu gestalten. Aus optischen Gründen werden solche Produkte zumindest teilweise von den Verbrauchern abgelehnt.

Die Druckschrift FR 1 462 606 A beschreibt bereits eine Vorrichtung, die ein in zwei Richtungen bewegliches Trennmesser aufweist. Dabei wird ein Fisch über ein Transportmittel transportiert und von einem Trennelement durchtrennt, wobei sich das Trennelement ebenfalls in Transportrichtung bewegt.

Die Druckschrift GB 2 337 362 A beschreibt eine Schneideinrichtung, die über einen Sensor gesteuert wird. Ein Trennmesser ist stationär angeordnet und durchtrennt das Lebensmittelprodukt vollständig.

Aus der EP 1 767 096 B1 ist es schon bekannt, dass das Messer synchron zum Strang mitbewegt wird. Es befindet sich dabei auf einer Kreisbahn, wobei die Horizontal- und Vertikalbewegung voneinander abhängen und nicht unabhängig steuerbar sind. Nachteilig ist hier also, dass die vertikale Schnittgeschwindigkeit von der Horizontalgeschwindigkeit des Produktstroms abhängt. Das bedeutet wiederum, dass die vertikale Schnittgeschwindigkeit nicht ausreichend schnell sein kann. Nur dann aber kann ein faseriges oder klebriges Produkt sauber durchtrennt werden. Die klebrigen Produkte neigen dazu, beim Weitertransport wieder aneinanderzuhaften. Ein weiterer Nachteil ist, dass der Strang auf dem Transportband mitlaufend abgequetscht wird.

Das bedeutet, dass der Strang nicht vollständig durchgetrennt werden kann, da der Trennvorgang oberhalb der Bandoberfläche stattfindet.

Hiervon ausgehend liegt der vorliegenden Erfindung die Aufgabe zugrunde, ein Verfahren und eine Vorrichtung bereitzustellen, die einen geraden, sauberen Schnitt bei hohen Taktzahlen ermöglichen und somit ein optisch ansprechendes Produkt mit exakter Gewichtsgenauigkeit ermöglichen.

Erfindungsgemäß wird diese Aufgabe durch die Merkmale der Ansprüche 1 und 9 gelöst.

Gemäß der vorliegenden Erfindung wird das Lebensmittelprodukt in Transportrichtung mit einer Transporteinrichtung transportiert. Die Transportrichtung gibt dabei die Richtung an, in der die Lebensmittelprodukte gefördert werden. Die Lebensmittelprodukte werden von einem Trennelement durchtrennt, wobei das Trennelement vorzugsweise sowohl in Transportrichtung T, also zusammen mit dem Lebensmittelprodukt als auch durch das Lebensmittelprodukt also z.B. quer zur Transportrichtung bewegt wird. Die Bewegung des Trennelements wird in eine erste Richtung und unabhängig von dieser Bewegung in eine zweite Richtung gesteuert. Somit kann ein exaktes vorab bestimmtes Schnittbild eingestellt werden.

Dabei liegt die Längsachse des Lebensmittelprodukts vorzugsweise in einer Ebene, die durch die Richtungsvektoren der beiden Bewegungsrichtungen aufgespannt wird. Eine Abweichung, d.h. ein Winkel zwischen der Längsachse des Lebensmittelprodukts und zuvor genannter Ebene von bis zu 10° ist akzeptabel. Dabei fällt der erste Richtungsvektor entweder mit der Längsachse des Lebensmittelprodukts zusammen oder bildet maximal einen Winkel von 10° mit ihr bzw. mit der Auflage.

Bevorzugt erfolgt die Bewegung des Trennelements durch das Lebensmittelprodukt,- z.B. quer oder unter einem Winkel von 0° bis 45° zur Transportrichtung bzw. zur Längsachse des Lebensmittelprodukts- unabhängig von dessen Bewegung in Transportrichtung T. Somit kann sich das Trennelement, obwohl es sich mit dem Lebensmittelprodukt mitbewegt, beliebig schnell durch das Lebensmittelprodukt z.B. quer zur Transportrichtung bewegen. Durch die Möglichkeit, dass das Trennelement in Transportrichtung und unter einem Winkel zur Transportrichtung unabhängig bewegt werden kann, kann die Bewegung des Trennelements exakt an bestimmte Prozessgegebenheiten angepasst werden, wodurch stets ein gerader Schnitt erzeugt werden kann. Dadurch, dass unabhängig von der Lebensmittelproduktgeschwindigkeit eine sehr schnelle Schnittbewegung möglich ist, kann auch faseriges und klebriges Produkt sauber durchtrennt werden.

Da gemäß der vorliegenden Erfindung das Lebensmittelprodukt im Abtrennbereich nicht auf dem Transportmittel aufliegt, kann das Trennelement sich vollständig durch das Lebensmittelprodukt über die Außenseiten bzw. die Außenkontur des Produkts hinaus bewegen. Somit wird ein sauberer, gerader Schnitt erzeugt und ein Abquetschen des Produkts verhindert. Dadurch, dass im Abtrennbereich das Lebensmittelprodukt frei geführt ist, ergibt sich Platz für die Bewegung des Trennelements, derart, dass das Trennelement im Abtrennbereich nicht nur durch das Lebensmittel z.B. quer zur Transportrichtung, sondern auch in Transportrichtung mit dem Lebensmittelprodukt bewegt werden kann. Unter Abtrennbereich versteht man den Bereich, in dem das Trennelement das Lebensmittelprodukt vollständig durchtrennt und somit insbesondere über eine angrenzende Auflagefläche hinaus bewegbar ist. Genau in diesem Abtrennbereich, in dem das Lebensmittelprodukt frei gelagert ist, ist nun ausreichend Platz für die Bewegung des Trennelements.

Die Erfindung ermöglicht eine hohe Leistung, da der Produktstrom nicht bei jedem Trennvorgang gestoppt und dann wieder gestartet werden muss. Ein kontinuierlicher Prozess ist möglich. Es ergibt sich eine bessere Gewichtsgenauigkeit der Portionen und eine verbesserte Produktoptik.

Beim Abtrennen wird das Trennelement derart gesteuert, dass es sich auf das Lebensmittelprodukt hin bewegt und vollständig durch das Lebensmittelprodukt über die Außenseite des Lebensmittelprodukts hinaus bewegt, während es sich mit dem Lebensmittel in Transportrichtung T mitbewegt. Da sich das Trennelement, während es sich durch das Lebensmittel hindurch bewegt, auch in Transportrichtung mit bewegt, kann die Relativbewegung zwischen Transporteinrichtung und Trennelement minimiert werden, so dass ein gerader Schnitt auf einfache Art und Weise erzeugt werden kann. Vorzugsweise entspricht die Geschwindigkeit des Trennelements der Geschwindigkeit der Transporteinrichtung.

Das Trennelement wird vorzugsweise so gesteuert, dass es nach dem vollständigen Durchtrennen des Lebensmittelprodukts aus dem Lebensmittelprodukt heraus bewegt wird und sich dabei in Transportrichtung schneller bewegt als das Lebensmittelprodukt, das auf das Trennelement zu bewegt wird, derart, dass das Trennelement in Transportrichtung von dem Lebensmittelprodukt weg fährt. Somit wird ein Anhaften des Produkts am Trennelement vermieden. Das abgetrennte Produkt, das in Transportrichtung hinter dem Trennelement liegt, kann dann in Transportrichtung T schneller bewegt werden als das Trennelement. Vorteilhafterweise weist die Transporteinrichtung zwei beabstandete Transportmittel auf, zwischen denen der Abtrennbereich liegt, wobei, wenn sich das Trennelement nach vollständigem Durchtrennen quer zur Transportrichtung zurück bewegt, gilt:

$$V_1 < V_2,$$

wobei in Transportrichtung T betrachtet $V_1$ die Transportgeschwindigkeit des ersten Transportmittels ist und $V_2$ die Transportgeschwindigkeit des zweiten Transportmittels. Wenn die Geschwindigkeit des zweiten Transportmittels größer ist als die des ersten Transportmittels und der Abtrennbereich zwischen den Transportmitteln liegt, dann ist es möglich, eine Lücke zwischen den abgetrennten Portionen auszubilden. Dies ist besonders vorteilhaft bei klebrigen Produkten, da diese dann nach dem Durchtrennen nicht mehr aneinander haften können.

Es ist ganz besonders vorteilhaft, wenn $V_1 < V_{Trennelement} < V_2$, wobei $V_{Trennelement}$ die Geschwindigkeit des Trennelements in Transportrichtung ist. Bei dem oben genannten Geschwindigkeitsverhältnis kann einerseits, wie zuvor beschrieben, eine Lücke zwischen dem getrennten Lebensmittelprodukt erzeugt werden und darüber hinaus kann sich das Trennelement von dem Lebensmittelprodukt wegbewegen und in einer Lücke zwischen dem Lebensmittelprodukt aus dem Produkt entfernt werden, ohne dass Masse an dem Trennelement haften bleibt.

Es ist auch möglich, dass beispielsweise mit Hilfe von mindestens einem Rückzugband die Lücke mit der Bewegung des Trennelements in Transportrichtung mit verschoben wird. Dies ermöglicht, dass die Lücke zwischen den Bändern sehr klein gehalten werden kann und nur unwesentlich größer als die Breite der Trennelementkante sein muss.

Vorteilhafterweise wird das Trennelement, insbesondere ein Trennmesser, auf eine Gegenschneide zu bewegt. Es ist vorteilhaft, wenn die Gegenschneide zur Bewegung des Trennelements in Transportrichtung mitbewegt wird, zumindest dann, wenn das Trennelement und die Gegenschneide aufeinandertreffen. Somit kann die Gegenschneide klein gehalten werden und darüber hinaus ist ein exaktes Abtrennen möglich.

Vorteilhafterweise kann die geschlossene Bahn, d.h. der Verlauf der Bewegung des Trennelements stufenlos frei eingestellt werden. Das heißt, dass die Bewegungsbahn für unterschiedliche Transportgeschwindigkeiten, Wurstkaliber etc. eingestellt werden kann, so dass beim Produktwechsel keine Umbaumaßnahmen nötig sind. Die geschlossene Bahn liegt dann in einer Ebene, die durch die Richtungsvektoren der unabhängigen Bewegungen bzw. der Antriebsachsen aufgespannt wird. Ganz besonders vorteilhaft ist, wenn auch die Geschwindigkeit des Trennelements in Transportrichtung innerhalb eines Abtrennzyklus, d.h. auf der geschlossenen Bahn, variiert wird, so dass beispielsweise während der Bewegung des Trennelements durch das Lebensmittelprodukt die Relativgeschwindigkeit zwischen Lebensmittelprodukt und Trennelement möglichst 0 ist, beim Zurückbewegen des Trennelements dann jedoch die Bahngeschwindigkeit des Trennelements erhöht wird, um das Trennelement schnell von dem Lebensmittelprodukt wegzubewegen.

Vorteilhafterweise ist das Lebensmittelprodukt ein Produkt aus folgender Gruppe: Hüllenloses Lebensmittelprodukt, Hackfleischstrang, Wurststrang, coextrudierter Wurststrang. Eine Vorrichtung gemäß der vorliegenden Erfindung weist eine Transporteinrichtung auf zum Transportieren des Lebensmittelprodukts in Transportrichtung T, eine Schneideinrichtung mit einem Trennelement zum Durchtrennen des Lebensmittelprodukts und mit einem Bewegungsmechanismus, über den das Trennelement sowohl in Transportrichtung als auch durch das Lebensmittel bewegbar ist. Der Bewegungsmechanismus ist derart ausgebildet, dass die Bewegung des Trennelements entlang zweier Antriebsachsen unabhängig in zwei Richtungen steuerbar ist und insbesondere, dass die Bewegung des Trennelements durch das Lebensmittel hindurch von der Bewegung des Trennelements in Transportrichtung unabhängig steuerbar ist. Die Vorrichtung ist derart aufgebaut, dass in einem Abtrennbereich, in dem das Trennelement das Lebensmittelprodukt vollständig durchtrennt, das Lebensmittelprodukt nicht auf dem Transportmittel aufliegt, und beim Abtrennen das Trennelement derart gesteuert wird, dass es sich auf das Lebensmittelprodukt hin bewegt und vollständig durch das Lebensmittelprodukt über die Außenseite des Lebensmittelsprodukts hinaus bewegt, während es sich mit dem Lebensmittel in Transportrichtung mit bewegt.

Im Abtrennbereich ist also keine Auflagefläche für das Lebensmittelprodukt vorgesehen oder aber das Lebensmittelprodukt wird derart geführt, dass im Abtrennbereich das Lebensmittelprodukt von der Auflagefläche beabstandet ist. So ist gewährleistet, dass das Produkt durch das Abtrennelement vollständig durchtrennt werden kann und nicht abgequetscht wird.

Vorteilhafterweise weist die Auflagefläche der Transporteinrichtung dabei für den Abtrennbereich eine Lücke auf. Die Lücke kann z.B. wie folgt erzielt werden: Die Transporteinrichtung kann zwei voneinander beabstandete Transportmittel, insbesondere umlaufende Transportmittel, wie beispielsweise zwei Transportbänder oder ein umlaufendes Transportmittel und ein Zuführrohr, umfassen, wobei der Abtrennbereich in der Lücke zwischen den Transportmitteln vorgesehen ist. Das Transportmittel kann aber auch ein umlaufendes Transportband umfassen, das im Abtrennbereich derart umgelenkt wird, dass die Lücke in der Auflagefläche des Transportbandes entsteht.

Es ist auch möglich, dass die Transporteinrichtung ein umlaufendes Transportmittel umfasst, wobei der Abtrennbereich dann vor dem Transportmittel, d.h. vor der Auflagefläche, vorgesehen ist. Auch so kann das Trennelement vollständig durch und über die Außenkontur des Produkts hinaus bewegt werden.

Vorteilhafterweise weist die Schneideinrichtung eine Gegenschneide für das Trennelement auf, die insbesondere in und entgegen der Transportrichtung bewegbar ist.

Wenn die Transporteinrichtung zwei voneinander beabstandete Transportmittel aufweist, ist es vorteilhaft, wenn die Transportmittel unabhängig voneinander ansteuerbar sind und die Geschwindigkeit der beiden Transportmittel unabhängig voneinander einstellbar ist. Somit kann beispielsweise eine Lücke zwischen abgetrennten Lebensmittelportionen erzeugt werden, indem das nachfolgende Transportmittel schneller läuft.

Im Falle von zwei Transportmitteln ist es vorteilhaft, wenn mindestens ein Transportmittel als Rückzugsband ausgebildet ist, da dann die Lücke zwischen den Transportmitteln verschiebbar ist.

Gemäß einer bevorzugten Ausführungsform umfasst die Transporteinrichtung ein Zuführrohr als erstes Transportmittel, über das das Lebensmittelprodukt einem zweiten Transportmittel zugeführt wird, wobei der Abtrennbereich in Transportrichtung betrachtet hinter dem Rohr liegt derart, dass im Abtrennbereich der Produktstrom nicht auf der Transporteinrichtung aufliegt. Dabei kann das Rohr entweder im Wesentlichen parallel zur Auflagefläche der Transporteinrichtung ausgerichtet sein oder aber unter einem bestimmten Winkel in einem Bereich von 0 bis 90°, insbesondere senkrecht. Wird der Produktstrom dann von oben zugeführt, kann ebenfalls geschnitten werden. In diesem Fall wird das Trennelement z.B. um 90° gedreht eingebaut, so dass dann horizontal geschnitten werden kann.

Das Rohr kann teleskopartig verlängerbar sein, insbesondere dann, wenn es sich im Wesentlichen parallel zur Auflagefläche der Transporteinrichtung erstreckt. Somit kann sich das Rohr mit einer Geschwindigkeit teleskopartig verlängern, die im Wesentlichen der Geschwindigkeit der Transporteinrichtung entspricht. Das Trennelement kann dann das Produkt an der Rohrkante entlang durchtrennen.

Gemäß einem weiteren Ausführungsbeispiel kann das Zuführrohr ein abgeschrägtes Ende aufweisen und das Trennelement schräg entlang der Kante bewegt werden, die dann als Gegenhalter dient. Bewegt sich das Trennelement in Transportrichtung mit dem Lebensmittelprodukt mit so bietet das abgeschrägte Rohr den Vorteil, dass über die gesamte Höhe des Schnitts eine "Gegenschneide " zur Verfügung steht und ein gerader Schnitt erzeugt werden kann. Die Geschwindigkeit des Lebensmittelprodukts und des Trennelements wird dann entsprechend eingestellt. Es ist auch möglich dass das Lebensmittelprodukt entlang der Rohrkante schräg abgeschnitten wird.

Die Erfindung wird nachfolgend unter Bezugnahme folgender Figuren näher erläutert.

Fig. 1 zeigt in perspektivischer Darstellung eine Ausführungsform einer Vorrichtung zum Trennen von Lebensmitteln gemäß der vorliegenden Erfindung.

Fig. 2 zeigt in perspektivischer Darstellung einen Bewegungsmechanismus zum Bewegen des Trennelements.

Fig. 3 zeigt in schematischer Darstellung die Schritte S1 bis S5 eines Trennvorgangs.

Fig. 4 zeigt grob schematisch einzelne Schritte eines Trennvorgangs mit einem Rückzugsbandsystem.

Fig. 5 zeigt grob schematisch eine weitere Ausführungsform der vorliegenden Erfindung mit umgelenktem Band.

Fig. 6    zeigt grob schematisch eine weitere Ausführungsform der vorliegenden Erfindung mit einem Abtrennbereich vor der Transporteinrichtung.

Fig. 7    zeigt grob schematisch eine weitere Ausführungsform der vorliegenden Erfindung, bei der der Produktstrom über ein Rohr zugeführt wird.

Fig. 8    zeigt grob schematisch eine weitere Ausführungsform gemäß der vorliegenden Erfindung mit teleskopartig verlängerbarem Zuführrohr.

Fig. 9    zeigt grob schematisch eine weitere Ausführungsform gemäß der vorliegenden Erfindung.

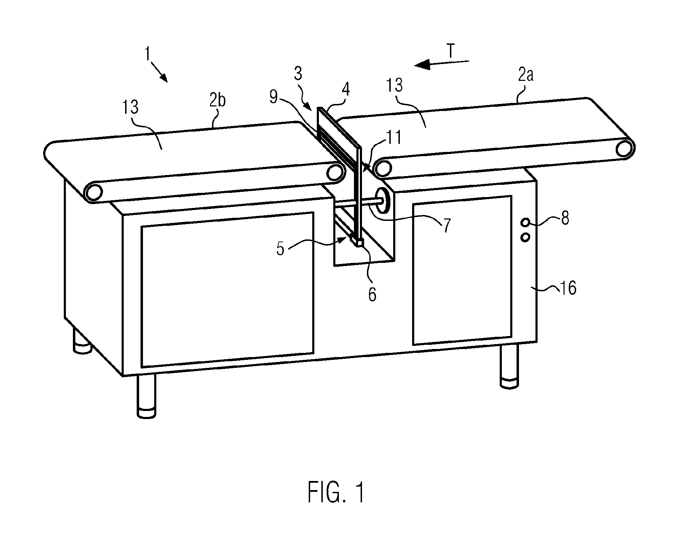

Fig. 1 zeigt in schematischer Darstellung eine mögliche Ausführungsform der vorliegenden Erfindung. Die Vorrichtung 1 zum Trennen von Lebensmittelprodukten 12 weist eine Transporteinrichtung 2a,b auf, die hier zwei umlaufende Transportmittel in Form von zwei umlaufenden Transportbändern 2a,b umfasst. Die Transportbänder weisen jeweils eine Auflagefläche 13 für das Lebensmittelprodukt auf. Die beiden Transportbänder 2a,b sind auf einem Maschinengehäuse 16 angebracht. Die beiden Transportmittel 2a,b weisen jeweils einen eigenen, nicht dargestellten Antrieb in Form eines Antriebsmotors auf und können unabhängig voneinander angesteuert werden. Auch die Geschwindigkeiten können unabhängig voneinander eingestellt werden. Es ist auch möglich nur einen Antrieb, z.B. einen Motor, vorzusehen und die Geschwindigkeiten der Transportmittel über entsprechende Getriebe mit unterschiedlichen Übersetzungen unabhängig voneinander einzustellen. Die Transportmittel können auch getaktet angesteuert werden.

Die Transportmittel 2a,b sind voneinander beabstandet, derart, dass sich eine Lücke 11 zwischen den Transportmitteln ergibt. Der Abstand bzw. die Lücke zwischen den Transportmitteln soll möglichst klein gehalten werden und beträgt, gemessen von den zueinander gewandten vordersten Enden maximal 40 mm Die Abmessung a der Lücke muss jedoch größer gleich der Stärke eines Trennelements 4 sein, derart, dass sich das Trennelement 4 durch die Lücke 11 bewegen kann. Das Trennelement 4 ist Teil einer Schneideinrichtung 3 zum Durchtrennen des Lebensmittelprodukts. Das Trennelement 4 ist vorzugsweise ein Trennmesser, ein Trenndraht, ein rotierendes Trennmesser, ein umlaufender Trenndraht oder auch ein sich hin und her bewegendes Messer.

Die Schneideinrichtung 3 umfasst ferner einen Bewegungsmechanismus 5 für das Trennelement 4, über den das Trennelement 4 sowohl in Transportrichtung T- hier horizontal- als auch unter einem Winkel zur Transportrichtung T- hier vertikal - bewegbar ist. Dazu weist der Bewegungsmechanismus eine erste Achse 6, hier eine Vertikalachse, und eine zweite Achse 7, hier eine Horizontalachse, auf, wobei die Achsen in diesem Ausführungsbeispiel senkrecht aufeinanderstehen. Ist beispielsweise die Auflagefläche 13 der Transportmittel geneigt, so kann auch der Bewegungsmechanismus derart geneigt werden, so dass z.B. die 2. Achse 7 parallel zur Auflagefläche 13 liegt.

Der Bewegungsmechanismus 5 ist derart ausgebildet, dass die Bewegung des Trennelements 4 durch das Lebensmittelprodukt, in diesem Fall quer zur Transportrichtung bzw. der Längsachse L des Lebensmittelprodukts unabhängig von der Bewegung des Trennelements 4 in Transportrichtung steuerbar ist. Somit kann sich das Trennelement, obwohl es sich mit dem Lebensmittelprodukt mitbewegt, beliebig schnell durch das Lebensmittelprodukt unter einem Winkel - hier quer zur Transportrichtung bewegen. Durch die Möglichkeit, dass das Trennelement in Transportrichtung und durch das Lebensmittelprodukt unabhängig bewegt werden kann, kann die Bewegung des Trennelements exakt an bestimmte Prozessgegebenheiten angepasst werden, wodurch stets ein gerader Schnitt erzeugt werden kann. Dadurch, dass unabhängig von der Lebensmittelproduktgeschwindigkeit eine sehr schnelle Schnittbewegung möglich ist, kann auch faseriges und klebriges Produkt sauber durchtrennt werden.

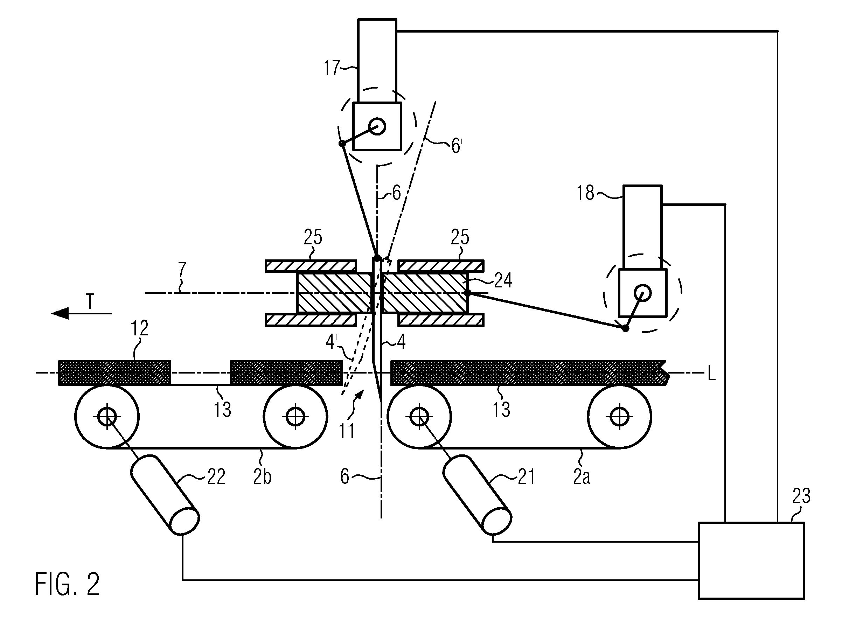

Fig. 2 zeigt eine mögliche Ausführungsform eines Bewegungsmechanismus 5 in größerem Detail. Der Bewegungsmechanismus weist dabei eine erste Antriebseinheit 17 auf, zum Bewegen des Trennelements 4 über die erste Achse 6 und eine zweite Antriebseinheit 18 zum Bewegen des Trennelements 4 über die zweiten Achse 7. Die beiden Antriebseinheiten umfassen hier jeweils einen eigenen Antriebsmotor. Aber auch ein gemeinsamer Antriebsmotor mit voneinander entkoppelten Getrieben ist möglich.

Mit Hilfe der ersten Antriebseinheit 17 wird das Trennelement 4 entlang der ersten Trennachse 6 bewegt. Das Messer wird dabei in einer Führung 24 geführt. Die Antriebachse 6 ist hier vertikal ausgerichtet, d.h. senkrecht zur Längsachse L des Lebensmittelprodukts bzw. senkrecht zur Auflagefläche 13 der z.B. zweiten Transporteinrichtung 2b. Das Trennelement 4 kann so auf das Lebensmittelprodukt 12 zu bewegt werden und dieses vollständig durchtrennen. Über die zweite Antriebseinheit 18 wird das Trennelement 4 in der ersten Antriebsrichtung 7 entlang der ersten Antriebsachse 7 bewegt. Bei diesem Ausführungsbeispiel wird dabei beispielsweise die Führung 24 entlang der Antriebsachse 7 bewegt. Dabei befindet sich die Führung 24 in einer weiteren Führung 25. Die Motoren der ersten und zweiten Antriebseinheit 17, 18 werden von einer Steuerung 23 angesteuert. Auch der Motor bzw. die Motoren 21, 22 der Transporteinrichtungen 2a, 2b werden von der Steuerung 23 entsprechend angesteuert.

Die Längsachse L liegt dabei in einer Ebene, die durch die Richtungsvektoren der beiden Bewegungsrichtungen bzw. durch die beiden Antriebsachsen 6 und 7 aufgespannt wird. Eine Abweichung, d.h. ein Winkel zwischen der Längsachse L des Lebensmittelprodukts 12 und der zuvor genannten Ebene von bis zu 45 Grad ist akzeptabel. Vorteilhafterweise ist die zweite Antriebsachse 7 parallel zur Längsachse L ausgerichtet. Ein Winkel zwischen der Antriebsachse 7 und der Längsachse L von 45° ist ebenfalls noch akzeptabel für die einwandfreie Funktion.

Wird beispielsweise die Transportrichtung, d.h. die Auflagefläche 13 zu einer Horizontalen geneigt, kann die Bewegungseinrichtung 5 entsprechend geneigt werden.

Mit der Bewegungseinrichtung 5 kann eine geschlossene Bahn des Trennelements stufenlos frei eingestellt werden, wobei die Bahn in der zuvor genannten Ebene liegt, die durch die Antriebsachsen 6 und 7 aufgespannt wird. Auch die Geschwindigkeit auf der geschlossenen Bahn kann über die Ansteuerung der Motoren 17, 18 beliebig eingestellt werden.

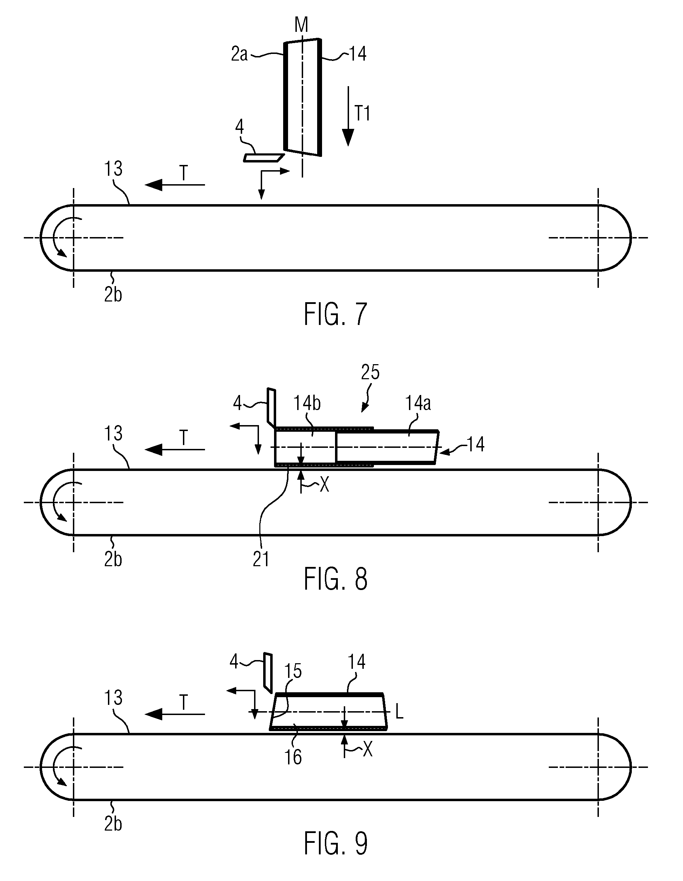

Zur Realisierung eines schrägen Schnitts kann beispielsweise, wie gestrichelt dargestellt, die Antriebsachse 6 geneigt werden, wie durch die Achse 6' in Fig. 2 dargestellt ist. Die Achse 6' ist dabei bis zu 45° zur Längsachse L ausgerichtet. Die Führung 24 weist dabei ebenfalls eine entsprechend ausgebildete Aussparung auf. Somit kann dann auch eine schräge Bewegung durch das Lebensmittelprodukt 12 unabhängig von einer Bewegung in Transportrichtung T erfolgen. Dies ist insbesondere dann wichtig, wenn beispielsweise entlang einer schrägen Rohrkante geschnitten wird, wie später noch im Zusammenhang mit Fig. 9 erläutert wird. Ein schräger Schnitt kann auch erreicht werden durch Anpassung der Geschwindigkeiten des Lebensmittelprodukts und des Trennelementes zueinander.

Die Schneideinrichtung 3 ist so ausgebildet und in der Vorrichtung angeordnet, dass sich das Trennelement 4 durch das Lebensmittelprodukt vollständig bis über die Außenseite bzw. Außenkontur des Lebensmittelprodukts hindurchbewegen kann. Das bedeutet, dass das Trennelement 4 sich mit der unteren Schneidkante tiefer als die Auflagefläche 13 bewegen kann, derart, dass ein vollkommener Schnitt durch das Produkt möglich ist. Im Abtrennbereich, wenn das Trennelement 4 das Lebensmittelprodukt vollständig durchtrennt, kann also die untere Schneidkante tiefer liegen als die Auflagefläche 13.

Dadurch, dass der Abtrennbereich 10 in der Lücke 11 zwischen den beiden Transportbändern 2a,b angeordnet ist, ist Platz für eine Bewegung des Trennelements 4 nicht nur in einer Richtung z.B. quer zur Transportrichtung T, sondern auch für eine Bewegung des Trennelements 4 zusammen mit dem Lebensmittelprodukt. Somit wird ein sauberer, gerader Schnitt erzeugt und ein Abquetschen des Produkts verhindert.

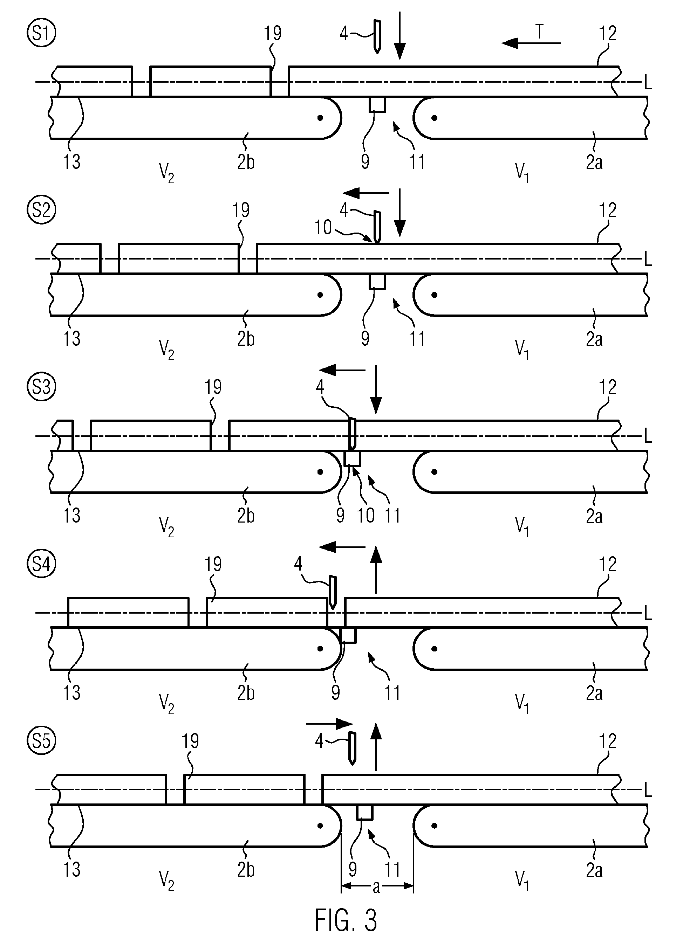

Vorteilhafterweise kann die Schneideinrichtung 3, wie insbesondere aus Fig. 2 und 3 hervorgeht, auch eine Gegenschneide 9 aufweisen. Beim vollständigen Durchtrennen des Wurststrangs trifft die Schneidkante des Trennelements auf die Gegenschneide. Vorteilhafterweise kann sich die Gegenschneide mit der Bewegung des Trennelements in Transportrichtung mit bewegen, zumindest dann, wenn das Trennelement und die Gegenschneide aufeinandertreffen. Es ist möglich, dass sich die Gegenschneide synchron zur Bewegung des Trennelements mit bewegt. Dazu ist ein entsprechender Bewegungsmechanismus vorgesehen, wie aus Fig. 2 hervorgeht. Der Bewegungsmechanismus kann mit dem Bewegungsmechanismus 5 gekoppelt sein, so dass kein eigener Antrieb für die Gegenschneide notwendig ist.

Die Funktionen der Transportmittel 2a,b sowie der Schneideinrichtung können wie erwähnt über die Steuerung 23 angesteuert werden. Die Steuerung kann auch Teil einer Hauptsteuerung einer Füllmaschine sein.

Fig. 3 zeigt die wesentlichen Schritte einer möglichen Ausführungsform des erfindungsgemäßen Verfahrens mit der in Fig. 1 gezeigten Vorrichtung. In der Fig. 3 ist zur vereinfachten Darstellung der Abstand a zwischen den Transportbändern 2a,b übertrieben groß dargestellt. Der Lebensmittelproduktstrom 12 wird der Transporteinrichtung 2 beispielsweise über ein Zuführrohr von einer Füllmaschine oder einem Füllstromteiler mittels Förderwerk bzw. Pumpe der Transporteinrichtung 2 zugeführt. Der Produktstrom kann dabei ein- oder mehrbahnig zugeführt werden. Die Bewegungsbahn und Geschwindigkeiten des Trennelements 4 werden vorab festgelegt und in einer Steuereinrichtung abgelegt. Die Bewegungsbahn und Geschwindigkeit des Trennelements 4 wurde an die aktuellen Prozessbedingungen wie z.B. Bandgeschwindigkeit, Produktart, Produktkaliber etc. angepasst.

In Schritt S1 eines Bewegungszyklus ist das Trennelement 4 in einer ersten von dem Lebensmittelprodukt 12 beabstandeten Position gezeigt. Vorteilhafterweise bewegen sich dabei die Transportmittel 2a, b mit gleichen Geschwindigkeiten, d.h. $V_1 = V_2$ ($V_1$ entspricht der Transportgeschwindigkeit in Transportrichtung T des ersten Transportmittels 2a und $V_2$ entspricht der Geschwindigkeit in Transportrichtung des zweiten Transportmittels 2b). Die Bewegungseinrichtung 5 bewegt nun das Trennelement 4 quer zur Transportrichtung T auf das Produkt 12 zu.

In Schritt S2 beginnt das Trennelement 4 das Lebensmittelprodukt 12 zu durchschneiden. Spätestens jetzt beginnt der Bewegungsmechanismus 5 das Trennelement 4 zusätzlich auch noch in Transportrichtung T zu bewegen. Vorteilhafterweise ist dabei die Geschwindigkeit des Trennelements 4 in Transportrichtung T $V_{Trennelement}$ genauso groß wie die Geschwindigkeit $V_1$ des Transportmittels 2a. Zumindest soll jedoch die Relativgeschwindigkeit zwischen Trennelement und erstem Transportmittel 2a möglichst klein sein, um einen geraden Schnitt zu erzeugen. Im Schritt S2 kann auch noch $V_2 = V_1$ gelten.

Das Trennelement 4 bewegt sich dann weiter durch das Produkt 12 und gleichzeitig in Transportrichtung T mit dem Produkt mit, wie aus Schritt S3 hervorgeht, bis es das Lebensmittelprodukt 12 vollständig durchtrennt und sich durch die Unterseite des Produkts durch bewegt, bis es z.B. auf eine Gegenschneide 9 trifft. Die Gegenschneide 9 kann sich dabei zumindest in dem Abtrennbereich 10, wenn das Trennelement und die Gegenschneide aufeinandertreffen, mit dem Trennelement 4 in Transportrichtung T mitbewegen. Auch eine synchrone Bewegung zum Trennelement 4 ist möglich.

Ist der Strang nach Schritt 3 komplett durchtrennt, kann die Geschwindigkeit V₂ des Transportbandes 2b erhöht sein, so dass gilt V₂ > V₁. Dadurch kann eine Lücke 19 zwischen den abgetrennten Portionen erzeugt werden, wie aus Schritt S4 deutlich wird. Auch beim Herausziehen des Messers im Schritt S4 kann das Trennelement 4 noch eine größere Geschwindigkeit $V_{Trennelement}$ als V1 aufweisen, wobei beim Zurückziehen des Trennelements vorzugsweise gilt:

$$V_1 < V_{Trennelement} < V_2.$$

Das Trennelement 4 bewegt sich, wie aus Schritt S5 hervorgeht, dann wieder weiter nach oben vom Produktstrang weg und entgegen Transportrichtung T zu der in Schritt S1 gezeigten Ausgangsposition, wobei dann wieder die in Zusammenhang mit Schritt 1 beschriebenen Bedingungen gelten. Die Variationen der Geschwindigkeiten $V_1$, $V_{Trennelement}$ und $V_2$ entsprechen einer besonders vorteilhaften Ausführungsform. Die vorliegende Erfindung funktioniert jedoch auch bei fest eingestellten Geschwindigkeiten, die nicht variiert werden. Es ist auch möglich, dass z.B. in Schritt 5 das Trennelement ausschließlich quer zur Transportrichtung bewegt wird und anschließend entgegen Transportrichtung - also keine überlagerte Bewegung stattfindet. Wesentlich bei der Erfindung ist, dass sich das Trennelement zumindest während es in den Wurststrang eingreift und den Strang vollständig durchtrennt (Schritt S2/ S3) mit dem Produkt mitbewegt.

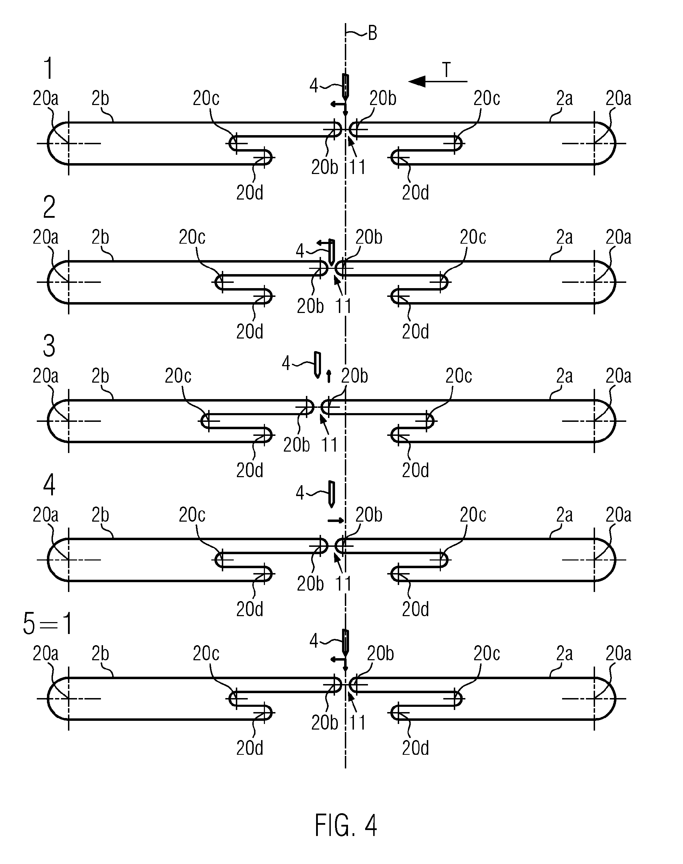

In Fig. 3 war zu Erklärungszwecken der Abstand a übertrieben groß eingezeichnet. Natürlich soll, damit das Produkt ausreichend gut auf der Auflagefläche 13 geführt wird, der Abstand möglichst gering sein. Fig. 4 zeigt ein bevorzugtes Ausführungsbeispiel mit einem Rückzugsbandsystem mit dem der Abstand minimiert werden kann.

Mit Hilfe eines Rückzugsbands kann die Lücke 11 zwischen den beiden Transportmitteln 2a,b in Transportrichtung T und zurück verschoben werden. Der Abstand a kann daher so klein gehalten werden, dass nur das Trennelement in der Lücke 11 Platz hat. Vorteilhafterweise wird die Lücke 11 synchron mit der Bewegung des Trennelements 4 in Transportrichtung T verschoben.

Bei einem Rückzugsbandsystem wird das Band z.B. an der der Schneidvorrichtung abgewandten Seite um eine Rolle 20a gelenkt und an der gegenüberliegenden Seite über mehrere Rollen. Die Achsen der Rollen 20b und 20c sind in Transportrichtung verstellbar angeordnet. Die Verstellung der Achsen kann beispielsweise über einen motorisch oder pneumatisch betätigten Linearantrieb erfolgen. Die Rolle 20d und 20a sind fixiert. Werden nun die Achsen der Rollen 20c und 20b beider Transportmittel jeweils gemeinsam in Transportrichtung verschoben, so wandert die Lücke 11 entsprechend in Transportrichtung, wie beim Vergleich des Zustands 1 und 2 deutlich wird. Im Zustand 1 wird das Messer zum Durchtrennen des Lebensmittelprodukts 12 z.B. nach unten, d.h. quer zur Transportrichtung T und in Transportrichtung T mit dem Produkt bewegt, wie vorab erklärt wurde. Mit der Bewegung des Trennelements 4 in Transportrichtung wird vorzugsweise synchron, wie zuvor beschrieben, die Lücke 11 mit verschoben. Bei diesem Ausführungsbeispiel wird im Zustand 2, in dem sich das Trennelement im unteren Totpunkt befindet, und das Lebensmittelprodukt 12 vollständig durchtrennt wurde, das Trennelement noch weiter in Transportrichtung T bewegt, wobei sich die Lücke 11 mit bewegt, indem die Achsen 20b,c der Transporteinrichtungen 2a,b entsprechend mit verschoben werden.

Im Zustand 3 wird nun das Trennelement 4 nach oben bewegt. Da hier keine Bewegung weiter in Transportrichtung T vom Trennelement 4 durchgeführt wird, bleibt die Lücke 11 in ihrer Position. Wie der Zustand 4 zeigt, wird das Trennelement 4 wieder entgegen der Transportrichtung in die ursprüngliche Position d.h. Zustand 1 verbracht. Es wäre auch möglich gewesen, die Bewegungen von Zustand 3 und 4 zu überlagern. Bei dem Zurückbewegen des Trennelements 4 bewegt sich durch Verschiebung der Achsen 20b,c entgegen Transportrichtung auch die Lücke 11 wieder entgegen Transportrichtung, bis zu dem Zustand 5, der der Ausgangsposition im Zustand 1 entspricht. Wird das Rückzugsbandsystem mit einer Messerkante ausgeführt, so kann dieses System gleichzeitig als Gegenschneide dienen. Eine Messerkante bedeutet hier z.B. eine Umlenkrolle 20b mit sehr kleinem Durchmesser. Die Messerkante ist dann derart an dem Rückzugsbandsystem bzw. mit deren beweglichen Achsen verbunden, dass sich die Messerkante bzw. Gegenschneide entsprechend der Bewegung des Trennelements bewegt.

Im Zusammenhang mit Fig. 4 wurde die Bewegung der Lücke 11 entsprechend der Bewegung des Trennelements 4 gezeigt. Die Einstellungen der Geschwindigkeiten $V_1$, $V_2$, $V_{Trennelement}$ können jedoch auch, wie im Zusammenhang mit Fig. 3 erläutert, ausgeführt werden.

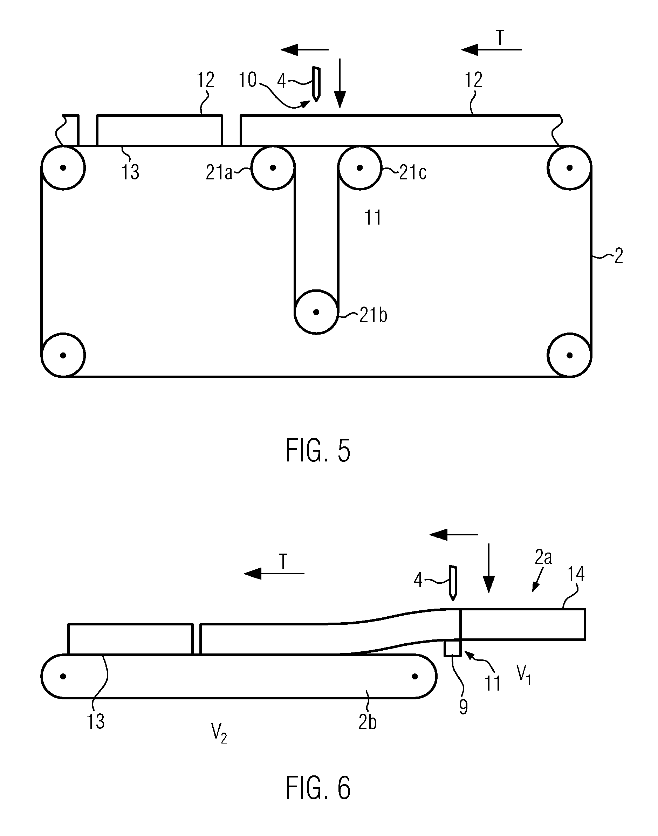

Fig. 5 zeigt eine weitere mögliche Ausführungsform der vorliegenden Erfindung, um eine Lücke in der Auflagefläche 13 eines Transportbandes der Transporteinrichtung 2 zu erzeugen. Dabei wird ein Transportband derart umgelenkt, über entsprechende Rollen 21 a, 21 b, 21 c, dass eine Lücke 11 in der Auflagefläche erzeugt wird, derart, dass das Trennelement 4 den Produktstrang vollständig über die Unterseite hinweg durchtrennen kann. Führt man entsprechend dem im Zusammenhang mit Fig. 4 erläuterten Rückzugsbandsystem die Achsen 21 a, 21 b, 21 c in Transportrichtung T und entgegen Transportrichtung T verschiebbar aus, so kann, wie zuvor erläutert, die Lücke 11 mit der Bewegung des Trennelements 4 mitgeführt werden. Ansonsten entspricht dieses Ausführungsbeispiel den zuvor gezeigten Ausführungsbeispielen.

Fig. 6 zeigt eine weitere mögliche Ausführungsform, bei der ein Zuführrohr 14 oder aber mehrere parallel zueinander angeordnete Zuführrohre 14 vorgesehen sind, die einen Produktstrang auf das Transportmittel 2b ausstoßen. Dabei kann das Zuführrohr 14 auch als erstes Transportmittel 2a gewertet werden und das Transportmittel 2b als zweites Transportmittel. Das Ausstoßende des Zuführrohrs 14 ist in Transportrichtung T betrachtet vor dem zweiten Transportmittel 2b angeordnet derart, dass das Lebensmittelprodukt im Abtrennbereich nicht auf dem Transportmittel, sprich hier nicht auf der Auflagefläche 13 aufliegt und dass der Produktstrang komplett durchtrennt werden kann. Auch in diesem Ausführungsbeispiel erfolgt die Bewegung des Trennelements 4 quer bzw. unter einem Winkel zur Transportrichtung T unabhängig von dessen Bewegung in Transportrichtung, wobei sich auch hier, wie zuvor beschrieben, das Trennelement 4 beim Abtrennen mit dem Produktstrang mit bewegt. Wie auch bei dem im Zusammenhang mit Fig. 3 beschriebenen Ausführungsbeispiel kann die Geschwindigkeit $V_2$ des Transportmittels 2b nach dem vollständigen Durchtrennen des Produktstroms höher sein als die Zuführgeschwindigkeit über das Rohr 14, wobei die Fördergeschwindigkeit des Produkts durch das Rohr 14 dann der ersten Transportgeschwindigkeit $V_1$ des ersten Transportmittels 2a in Fig. 3 entsprechen würde. So lässt sich auch mit diesem Ausführungsbeispiel eine Lücke 19 zwischen den abgeteilten Portionen erzeugen. Auch hier kann beim Zurückbewegen des Trennmessers 4 aus dem Produktstrang heraus gelten $V_1 < V_{Trennelement} < V_2$, wobei hier die Geschwindigkeit $V_1$ die Transportgeschwindigkeit des Transportmittels 14 ist, das den Produktstrang zuführt. Die Geschwindigkeit des Produktstrangs über das Zuführrohr 14 ist beispielsweise über ein nicht dargestelltes Förderwerk bzw. Flügelzellenpumpe etc. einstellbar.

Fig. 7 entspricht dem in Fig. 6 gezeigten Ausführungsbeispiel, wobei jedoch hier das Zuführrohr 14 das Lebensmittelprodukt von oben auf die Transporteinrichtung 2 zuführt. In diesem Fall wird der Bewegungsmechanismus und das Trennelement um 90° gedreht eingebaut oder aber sollte sich das Rohr 14 nicht um 90° zum Förderband 2 erstrecken, um den Winkel gedreht, der einem Winkel zwischen Mittelachse M des Rohrs und der Auflagefläche 13 entspricht. Auch hier können mehrere Zuführrohre 14 hintereinander (in die Bildebene hinein) angeordnet sein. Der Auslass des Rohrs ist schräg ausgebildet. Das bedeutet, dass, die Ebene in der die geschlossene Endkante des Rohrs liegt nicht senkrecht zur Mittelachse M des Rohrs geneigt ist, sondern unter einem Winkel von 0° - 45°.

Auch hier bewegt sich das Trennelement 4 sowohl in Transportrichtung T1 des Produkts 12 (hier senkrecht zur Auflagefläche 13 bzw. entlang der Mittelachse L) mit dem Produktstrang mit, derart, dass es keine Relativgeschwindigkeit zwischen dem Trennelement 4 und dem Produktstrom gibt oder diese Geschwindigkeitsdifferenz minimiert wird. Darüber hinaus bewegt sich das Trennelement 4, wie bei den vorherigen Ausführungsbeispielen auch, quer zu dieser Transportrichtung T1 des Produkts, um das Produkt vollständig zu durchtrennen. Während das Produkt durchtrennt wird, liegt es auf keiner Auflagefläche auf, so dass das Trennelement 4 das Produkt vollständig durchtrennen kann, d.h. über die Seitenkontur des Produkts hinaus. Bewegt sich das Trennelement in Transportrichtung mit dem Lebensmittelprodukt mit so bietet das abgeschrägte Rohr den Vorteil, dass über die gesamte Höhe des Schnitts eine "Gegenschneide " zur Verfügung steht und ein gerader Schnitt erzeugt werden kann. Die Geschwindigkeit des Lebensmittelprodukts und des Trennelements wird dann entsprechend eingestellt.

Es ist auch möglich, dass wenn ein schräges Rohrende vorgesehen ist, das Trennelement 4 nicht senkrecht zur Transportrichtung T1 bzw. zur Mittelachse M bewegt wird, sondern unter einem Winkel, der vorzugsweise dem Winkel entspricht, den die Ebene, in der die geschlossene Endkante des Rohrs liegt, mit der Mittelachse M bildet (siehe auch Fig. 2). Dann ist es möglich, dass das Trennelement 4 sich entlang dem abgeschrägten Rohrende durch das Lebensmittelprodukt 12 hindurch bewegt, wodurch ein schräger Schnitt erzeugt werden kann. Das Rohrende dient dann als Gegenhalterung für das Trennelement 4. Das Trennelement kann dabei die Rohrkante berühren oder einen Abstand bis zu.2 mm zur Rohrkante haben. Ein schräger Schnitt kann auch erreicht werden durch Anpassung der Geschwindigkeiten des Lebensmittelprodukts und des Trennelementes zueinander.

Fig. 8 zeigt eine weitere Ausführungsform der vorliegenden Erfindung, die der im Zusammenhang mit Fig. 6 und 7 beschriebenen Ausführungsform entspricht, wobei jedoch hier das Zuführrohr 14 nicht vor der Transporteinrichtung 2 sondern über der Transporteinrichtung 2 in einem Abstand x zur Oberfläche angeordnet ist. Das Rohr weist einen ersten Rohrabschnitt 14a auf, der feststeht und einen teleskopartig verschiebbaren zweiten Rohrabschnitt 14b, der sich in Transportrichtung T und zurück bewegen kann. Somit kann das Rohr mit einer Geschwindigkeit teleskopartig verlängert werden, die im Wesentlichen der Geschwindigkeit des Transportmittels 2b entspricht und zwar entsprechend der Bewegung des Trennelements 4 in Transportrichtung T. Das Trennelement 4 kann das Produkt dann an der Rohrkante 21 entlang abtrennen. Somit kann ein gerader Schnitt entlang der Rohrkante realisiert werden. Dadurch, dass das Rohr um den Abstand x von der Auflagefläche 13 des Transportbandes beabstandet ist, liegt das Lebensmittelprodukt beim Abtrennen nicht auf der Auflagefläche 13 auf, so dass es vollständig durchtrennt werden kann. Der Abstand x liegt in einem Bereich von 1 mm bis 10 mm. Dadurch, dass sich das teleskopartige Zuführrohr synchron zur Bewegung des Trennelements 4 verlängert bzw. verkürzt, kann ein besonders gerader Schnitt entlang der Rohrkante realisiert werden. Die teleskopartige Ausbildung des Zuführrohrs 14 kann auch in dem in Fig. 6 und Fig. 7 gezeigten Ausführungsbeispiel entsprechend realisiert werden, und ist auch wie in Zusammenhang mit Fig.7 erläutert mit schräger Rohrkante möglich um einen schrägen oder geraden Schnitt zu erzeugen.

Wenn an der Rohrkante entlang geschnitten wird, braucht man keine Gegenschneide bzw. entspricht die Rohrkante der Gegenschneide.

Fig. 9 zeigt eine weitere Ausführungsform gemäß der vorliegenden Erfindung. Fig. 9 entspricht dem im Zusammenhang mit Fig. 7 gezeigten Ausführungsbeispiel, wobei hier das Rohr um 90° gedreht ist, also parallel zur Auflagefläche 13 des Transportmittels 2b ausgerichtet ist. Auch hier kann, wie zuvor erläutert, das Trennelement 4 entweder zum Durchtrennen des Produktstrangs 12 senkrecht zur Längsachse L des Produkts 12 durch das Produkt 12 bewegt werden oder aber beispielsweise schräg entlang dem abgeschrägten Rohrende. Der Abstand X liegt hier ebenfalls wieder in einem Bereich von 1 mm bis 10 mm Der schräge Schnitt kann erzeugt werden, indem das Messer bzw. die Antriebsachse 6' ebenfalls, wie im Zusammenhang mit Fig. 2 erläutert, schräggestellt ist oder aber indem über die Antriebseinheiten 17 und 18 die Bewegungsbahn des Trennmessers 4 so eingestellt wird, dass sich ein entsprechend schräges Schnittbild einstellt. Auch die Geschwindigkeit wird entsprechend angepasst. Ein schräger Schnitt des Produkts kann erzeugt werden, wenn die Linearbewegung des Produkts d.h. die Geschwindigkeit in Transportrichtung, ungleich der Linearbewegung des Trennelementes z.B. Drahts oder Messer ist oder die Einheit schräg gestellt wird, oder das Messer schräg eingebaut wird.

Bei den in Zusammenhang mit Fig. 6-9 gezeigten Ausführungsbeispielen haben die Rohre einen ringförmigen Querschnitt. Die Rohre können z.B. auch einen eckigen oder ovalen Querschnitt aufweisen.

Es ist auch ein Trennelement mit Schneiden auf beiden Seiten möglich (oben und unten).Wird die Schneidbewegung rotatorisch eingeleitet, ist auch ein ziehender Schnitt denkbar.

**Patentansprüche**

1. Verfahren zum Trennen von Lebensmittelprodukten (12), mit folgenden Schritten:

    - Transportieren des Lebensmittelprodukts (12) in Transportrichtung (T) mit einer Transporteinrichtung (2, 2a, 2b),
    - Durchtrennen des Lebensmittelprodukts (12), wobei ein Trennelement (4) durch das Lebensmittelprodukt hindurchbewegt wird und in Transportrichtung (T) mit dem Lebensmittelprodukt mitbewegt wird, wobei
    - die Bewegung des Trennelements (4) in eine erste Richtung und unabhängig von der Bewegung in eine zweite Richtung gesteuert wird, und
    - das Lebensmittelprodukt (12) im Abtrennbereich (10) nicht auf dem Transportmittel (2, 2a, 2b) aufliegt, und
    - beim Abtrennen das Trennelement (4) derart gesteuert wird, dass es sich auf das Lebensmittelprodukt hin bewegt und vollständig durch das Lebensmittelprodukt (12) über die Außenseite des Lebensmittelprodukts (12) hinaus bewegt, während es sich mit dem Lebensmittel in Transportrichtung (T) mit bewegt.

2. Verfahren nach Anspruch 1, **dadurch gekennzeichnet, dass** die Bewegung des Trennelements (4) durch das Lebensmittelprodukt unabhängig von dessen Bewegung in Transportrichtung (T) gesteuert wird.

3. Verfahren nach Anspruch 2, **dadurch gekennzeichnet, dass** das Trennelement (4) so gesteuert wird, dass es nach dem vollständigen Durchtrennen des Lebensmittelprodukts (12) aus dem Lebensmittelprodukt (12) heraus bewegt wird und sich dabei in Transportrichtung (T) schneller bewegt als das Lebensmittelprodukt (12) das auf das Trennelement (4) zu bewegt wird derart, dass das Trennelement (4) in Transportrichtung (T) von dem Lebensmittelprodukt (12) wegfährt.

4. Verfahren nach mindestens einem der Ansprüche 1 bis 3, **dadurch gekennzeichnet, dass** die Transporteinrichtung (2, 2a, 2b) zwei beabstandete Transportmittel (2a,b) aufweist, zwischen denen der Abtrennbereich (10) liegt, wobei wenn sich das Trennelement (4) nach vollständigem Durchtrennen aus dem Lebensmittelprodukt herausbewegt gilt:

$$V_1 < V_2,$$

wobei in Transportrichtung (T) betrachtet $V_1$ die Transportgeschwindigkeit des ersten Transportmittels ist und $V_2$ die Transportgeschwindigkeit des zweiten Transportmittels ist, und insbesondere gilt:

$$V_1 < V_{Trennelement} < V_2,$$

wobei $V_{Trennelement}$ die Geschwindigkeit des Trennelements in Transportrichtung (T) ist.

5. Verfahren nach mindestens einem der Ansprüche 1 bis 4, **dadurch gekennzeichnet, dass** die Transporteinrichtung (2, 2a, 2b) zwei beabstandete, insbesondere umlaufende Transportmittel (2a,b) aufweist, wobei in der Lücke (11) zwischen den Transportmitteln (2a,b) der Abtrennbereich (10) vorgesehen ist und während eines Abtrennzyklus die Lücke (11) mit der Bewegung des Trennelements (4) verschoben wird.

6. Verfahren nach mindestens einem der Ansprüche 1 bis 5, **dadurch gekennzeichnet, dass** das Trennelement (4) auf eine Gegenschneide (9) zubewegt wird und vorzugsweise die Gegenschneide (9) zur Bewegung des Trennelements (4) in Transportrichtung (T) mitbewegt wird, zumindest wenn das Trennelement (4) und die Gegenschneide (9) aufeinandertreffen.

7. Verfahren nach mindestens einem der Ansprüche 1 bis 6, **dadurch gekennzeichnet, dass** die geschlossene Bahn des Trennelements (4) stufenlos frei einstellbar ist und insbesondere die Geschwindigkeit des Trennelements in Transportrichtung auf der geschlossenen Bahn variabel eingestellt wird.

8. Verfahren nach mindestens einem der Ansprüche 1 bis 7, **dadurch gekennzeichnet, dass** das Lebensmittelprodukt (12) eines aus folgender Gruppe ist: Hackfleischstrang, Wurststrang, koextrudierter Wurststrang, hüllenloses Lebensmittel.

9. Vorrichtung insbesondere zum Durchführen des Verfahrens nach mindestens einem der Ansprüche 1 bis 8 mit

   - einer Transporteinrichtung (2, 2a, 2b) zum Transportieren des Lebensmittelprodukts (12) in Transportrichtung (T),
   - einer Schneideinrichtung (3) mit einem Trennelement (4) zum Durchtrennen des Lebensmittelprodukts (12) und mit
   - einem Bewegungsmechanismus (5), über den das Trennelement (4) durch das Lebensmittelprodukt bewegt werden und in Transportrichtung (T) mit dem Lebensmittelprodukt mit bewegt werden kann,

   **dadurch gekennzeichnet, dass**
   der Bewegungsmechanismus (5) derart ausgebildet ist, dass die Bewegung des Trennelements (4) entlang zweier Antriebsachsen (6,7) unabhängig in zwei Richtungen steuerbar ist, und die Vorrichtung derart aufgebaut ist, dass in einem Abtrennbereich (10), in dem das Trennelement (4) das Lebensmittelprodukt (12) vollständig durchtrennt, das Lebensmittelprodukt (12) nicht auf dem Transportmittel (2, 2a, 2b) aufliegt, wobei beim Abtrennen das Trennelement (4) derart gesteuert wird, dass es sich auf das Lebensmittelprodukt hin bewegt und vollständig durch das Lebensmittelprodukt (12) über die Außenseite des Lebensmittelprodukts (12) hinaus bewegt, während es sich mit dem Lebensmittel in Transportrichtung (T) mit bewegt.

10. Vorrichtung nach Anspruch 9, **dadurch gekennzeichnet**, der Bewegungsmechanismus (5) derart ausgebildet ist, dass die Bewegung des Trennelementes (4) durch das Lebensmittelprodukt (12) unabhängig von der Bewegung des Trennelements (4) in Transportrichtung (T) steuerbar ist.

11. Vorrichtung nach Anspruch 9 oder 10, **dadurch gekennzeichnet, dass** im Abtrennbereich (10) keine Auflagefläche (13) für das Lebensmittelprodukt (12) vorgesehen ist oder das Lebensmittelprodukt (12) derart geführt wird, dass im Abtrennbereich (10) das Lebensmittelprodukt (12) von der Auflagefläche (13) beabstandet ist.

12. Vorrichtung nach mindestens einem der Ansprüche 9 bis 11, **dadurch gekennzeichnet, dass** eine Auflagefläche (13) der Transporteinrichtung (2, 2a, 2b) eine Lücke (11) in der der Abtrennbereich vorgesehen ist aufweist wobei insbesondere entweder

   a) die Transporteinrichtung (2, 2a, 2b, 14) zwei voneinander beabstandete Transportmittel (2a,b), insbesondere umlaufende Transportmittel (2a,b), umfasst, wobei der < Abtrennbereich (10) in der Lücke (11) zwischen den Transportmitteln (2a,b) vorgesehen ist oder
   b) das Transportmittel (2a;b) ein umlaufendes Transportband (2) umfasst, das im Abtrennbereich (10) derart umgelenkt wird, dass die Lücke (11) in der Auflagefläche des Transportbandes (2) entsteht.

13. Vorrichtung nach mindestens einem der Ansprüche 9 oder 12, **dadurch gekennzeichnet, dass** die Transporteinrichtung (2, 2a, 2b) ein umlaufendes Transportmittel (2b) umfasst, wobei der Abtrennbereich (10) vor dem Transportmittel (2b) liegt.

14. Vorrichtung nach mindestens einem der vorherigen Ansprüche 9 bis 13 , dadurch gekennzeich- net, dass die Schneideinrichtung (3) eine Gegenschneide (9) für das Trennelement (4) aufweist, die insbesondere in und entgegen der Transportrichtung (T) bewegbar ist.

15. Vorrichtung nach mindestens Anspruch 12, **dadurch gekennzeichnet, dass** im Fall a) die Transportmittel (2a,b) unabhängig voneinander ansteuerbar sind und die Geschwindigkeit der beiden Transportmittel (2a,b) unabhängig voneinander einstellbar ist.

16. Vorrichtung nach mindestens Anspruch 12, **dadurch gekennzeichnet, dass** im Fall a) mindestens ein Transportmittel (2a,b) als Rückzugsband ausgebildet ist.

17. Vorrichtung nach mindestens einem der Ansprüche 9 bis 16, **dadurch gekennzeichnet, dass** die Transporteinrichtung (2, 2a, 2b) ein Zuführrohr (14) als erstes Transportmittel umfasst, über das das Lebensmittelprodukt (12) einem zweiten Transportmittel (2, 2a, 2b) zugeführt wird und der Abtrennbereich (10) in Transportrichtung (T) hinter dem Rohr (14) liegt, derart, dass im Abtrennbereich (10) der Produktstrom nicht auf der Transport- einrichtung (2, 2a, 2b) aufliegt.

18. Vorrichtung nach Anspruch 17, **dadurch gekennzeichnet, dass** das Rohr (14) teleskopar- tig verlängerbar ist, insbesondere mit der Bewegung des Trennelements (4).

19. Vorrichtung nach mindestens Anspruch 17 **dadurch gekennzeichnet, dass** das Rohr (14) ein abgeschrägtes Ende aufweist.

**Claims**

1. Method of separating food products (12), with the following steps:

    - transporting the food product (12) in the direction of transport (T) with a conveying device (2, 2a, 2b),
    - cutting through the food product (12), wherein a cutting element (4) is moved through the food product and moved along with the food product in the direction of transport (T), wherein
    - the motion of the cutting element (4) is controlled into a first direction and, independent of this motion, into a second direction,
    - the food product (12) does not rest on the conveying means (2, 2a, 2b) in the cutting area (10) and.
    - during the separation operation, the cutting element (4) is controlled such that it moves towards the food product and completely through the food product (12) beyond the outer surface of the food product (12) while it moves along with the food in the direction of transport (T).

2. Method according to claim 1, **characterized in that** the motion of the cutting element (4) through the food product is controlled independently of its motion in the direction of transport (T).

3. Method according to claim 2, **characterized in that** the cutting element (4) is controlled such that it is, after the food product (12) has been completely cut through, moved out of the food product (12) and moves faster in the direction of transport (T) than the food product (12) which is moved towards the cutting element (4), such that the cutting element (4) drives away from the food product (12) in the direction of transport (T).

4. Method according to at least one of claims 1 to 3, **characterized in that** the conveying device (2, 2a, 2b) comprises two spaced conveying means (2a, b) between which the cutting area (10) is located, where, when the cutting element (4) moves out of the food product after it has been completely cut through, the following applies:

$$V_1 < V_2,$$

where, seen in the direction of transport (T), $V_1$ is the transport speed of the first conveying means and $V_2$ is the transport speed of the second conveying means, and in particular:

$$V_1 < V_{\text{cutting element}} < V_2,$$

wherein $V_{\text{cutting element}}$ is the speed of the cutting element in the direction of transport (T).

5. Method according to at least one of claims 1 to 4, **characterized in that** the conveying device (2, 2a, 2b) comprises two spaced, in particular circulating conveying means (2a, 2b), wherein in the gap (11) between the conveying means (2a, b) the cutting area (10) is provided, and the gap (11) is shifted, during a separation cycle, together with the motion of the cutting element (4).

6. Method according to at least one of claims 1 to 5, **characterized in that** the cutting element (4) is moved towards a counter edge (9) and the counter edge (9) is preferably moved along with the motion of the cutting element (4) in the direction of transport (T), at least when the cutting element (4) and the counter edge (9) strike each other.

7. Method according to at least one of claims 1 to 6, **characterized in that** the closed path of the cutting element (4) can be freely adjusted continuously variably, and in particular the speed of the cutting element is variably adjusted on the closed path in the direction of transport.

**8.** Method according to at least one of claims 1 to 7, **characterized in that** the food product (12) is one of the following group: minced meat length, sausage length, coextruded sausage length, food without casing.

**9.** Device in particular for performing the method according to at least one of claims 1 to 8, with

> - a transport device (2, 2a, 2b) for transporting the food product (12) in the direction of transport (T),
> - a cutting device (3) with a cutting element (4) for cutting through the food product (12), and with
> - a motion mechanism (5) via which the cutting element (4) can be moved through the food product and moved along with the food product in the direction of transport (T),
>
> **characterized in that**
> the motion mechanism (5) is designed such that the motion of the cutting element (4) can be independently controlled along two drive axes (6, 7) in two directions, and the device is designed such that in a cutting area (10) in which the cutting element (4) completely cuts through the food product (12), the food product (12) does not rest on the conveying means (2, 2a, 2b), wherein
> during the separation operation, the cutting element (4) is controlled such that it moves towards the food product and completely through the food product (12) beyond the outer surface of the food product (12) while it moves along with the food in the direction of transport (T).

**10.** Device according to claim 9, **characterized in that** the motion mechanism (5) is designed such that the motion of the cutting element (4) through the food product (12) can be controlled independently of the motion of the cutting element (4) in the direction of transport (T).

**11.** Device according to claim 9 or 10, **characterized in that** in the cutting area (10), no support surface (13) for the food product (12) is provided, or the food product (12) is guided such that in the cutting area (10), the food product (12) is spaced apart from the support surface (13).

**12.** Device according to at least one of claims 9 to 11, **characterized in that** a support surface (13) of the conveying device (2, 2a, 2b) comprises a gap (11) in which the cutting area is provided, wherein in particular either

> a) the conveying device (2, 2a, 2b, 14) comprises two spaced conveying means (2a, b), in particular circulating conveying means (2a, b), wherein the cutting area (10) is provided in the gap (11) between the conveying means (2a, b), or
b) the conveying means (2a, b) comprises a circulating conveying belt (2) which is deflected in the cutting area (10) such that the gap (11) is formed in the support surface of the conveying belt (2).

**13.** Device according to at least one of claims 9 or 12, **characterized in that** the conveying device (2, 2a, 2b) comprises a circulating conveying means (2b), wherein the cutting area (10) is upstream of the conveying means (2b).

**14.** Device according to at least one of the preceding claims, **characterized in that** the cutting device (3) comprises a counter edge (9) for the cutting element (4) which can be in particular moved into and against the direction of transport (T).

**15.** Device at least according to claim 12, **characterized in that** in case a), the conveying means (2a, b) can be controlled independently of each other, and the speed of the two conveying means (2a, b) can be adjusted independently of each other.

**16.** Device at least according to claim 12, **characterized in that** in case a), at least one conveying means (2a, b) is designed as pull-back belt.

**17.** Device according to at least one of claims 9 to 16, **characterized in that** the conveying device (2, 2a, 2b) comprises a supply tube (14) as first conveying means via which the food product (12) is supplied to a second conveying means (2, 2a, 2b) and the cutting area (10) is located in the direction of transport (T) downstream of the tube (14), such that the product flow does not rest on the conveying device (2, 2a, 2b) in the cutting area (10).

**18.** Device according to at least one of claims 9 to 17, **characterized in that** the tube (14) can be extended like a telescope, in particular with the motion of the cutting element (4).

**19.** Device at least according to claim 17, **characterized in that** the tube (14) comprises a beveled end.

## Revendications

**1.** Procédé de découpe de produits alimentaires (12) comportant les étapes suivantes :

> - transport du produit alimentaire (12) dans une direction de transport (T) au moyen d'un dispositif de transport (2, 2a, 2b)

- découpe du produit alimentaire (12), un élément de coupe (4) étant déplacé à travers le produit alimentaire et étant déplacé avec le produit alimentaire dans la direction de transport (T),
- le mouvement de l'élément de coupe (4) étant commandé dans une première direction et, indépendamment du mouvement, dans une deuxième direction, et
- le produit alimentaire (12) ne reposant pas sur le moyen de transport (2, 2a, 2b) dans la zone de découpe (10), et
- l'élément de coupe (4) étant commandé, lors de la découpe, de manière à ce qu'il se déplace vers le produit alimentaire et qu'il se déplace entièrement à travers le produit alimentaire (12), jusqu'au-delà du côté extérieur du produit alimentaire (12), pendant qu'il se déplace avec l'aliment dans la direction de transport (T).

2. Procédé selon la revendication 1, **caractérisé en ce que** le mouvement de l'élément de coupe (4) à travers le produit alimentaire est commandé indépendamment de son mouvement dans la direction de transport (T).

3. Procédé selon la revendication 2, **caractérisé en ce que** l'élément de coupe (4) est commandé de manière à ce qu'après avoir complètement découpé le produit alimentaire (12), il soit déplacé hors du produit alimentaire (12) et, ce faisant, se déplace plus rapidement dans la direction de transport (T) que le produit alimentaire (12) en mouvement vers l'élément de coupe (4), de telle manière que l'élément de coupe (4) s'éloigne du produit alimentaire (12) dans la direction de transport (T).

4. Procédé selon l'une quelconque des revendications 1 à 3, **caractérisé en ce que** le dispositif de transport (2, 2a, 2b) comporte deux moyens de transports (2a,b) espacés, entre lesquels se trouve la zone de découpe (10), où, lorsque l'élément de coupe (4) se déplace hors du produit alimentaire après l'avoir entièrement coupé,

$$V_1 < V_2$$

où, considérés dans la direction de transport (T), $V_1$ dénote la vitesse de transport du premier moyen de transport et $V_2$ dénote la vitesse de transport du deuxième moyen de transport, en particulier

$$V_1 < V_{\text{élément de coupe}} < V_2$$

où $V_{\text{élément}}$ de coupe est la vitesse de l'élément de coupe dans la direction de transport (T).

5. Procédé selon au moins une des revendications 1 à 4, **caractérisé en ce que** le dispositif de transport (2, 2a, 2b) comporte deux moyens de transports (2a,b) espacés, en particulier circulants, la zone de découpe (10) étant prévue dans l'espace (11) entre les moyens de transport (2a,b) et l'espace (11) étant déplacé avec le mouvement de l'élément de coupe (4) pendant un cycle de découpe.

6. Procédé selon au moins une des revendications 1 à 5, **caractérisé en ce que** l'élément de coupe (4) est déplacé vers un contre-couteau (9) et, de préférence, que le contre-couteau (9) est déplacé avec le déplacement de l'élément de coupe (4) dans la direction de transport (T), du moins lorsque l'élément de coupe (4) et le contre-couteau (9) se rencontrent.

7. Procédé selon au moins une des revendications 1 à 6, **caractérisé en ce que** le parcours fermé de l'outil de coupe (4) est librement réglable en continu et qu'en particulier la vitesse de l'élément de coupe dans la direction de transport dans le parcours fermé est ajusté de manière variable.

8. Procédé selon au moins une des revendications 1 à 7, **caractérisé en ce que** le produit alimentaire (12) est l'un parmi : un boudin de viande hachée, un boudin de saucisse, un boudin de saucisse co-extrudée, un aliment sans enveloppe.

9. Dispositif, en particulier pour la mise en oeuvre du procédé selon au moins une des revendications 1 à 8, avec:

- un dispositif de transport (2, 2a, 2b) pour transporter le produit alimentaire (12) dans la direction de transport (T),
- un dispositif de découpe (3) avec un élément de coupe (4) pour couper le produit alimentaire (12) et avec
- un mécanisme de déplacement (5) au moyen duquel l'élément de coupe (4) peut être déplacé à travers le produit alimentaire et peut être déplacé avec le produit alimentaire dans la direction de transport (T),

**caractérisé en ce que**
le mécanisme de déplacement (5) est configuré de telle manière que le mouvement de l'élément de coupe (4) est contrôlable indépendamment dans deux direction le long de deux axes d'entraînement (6, 7), et
le dispositif est construit de telle manière que dans une zone de découpe (10), dans laquelle l'élément de coupe (4) coupe entièrement le produit alimentaire (12), le produit alimentaire (12) ne repose pas sur le moyen de transport (2, 2a, 2b), l'élément de coupe (4) étant commandé de telle manière, lors de la découpe, qu'il se déplace vers le produit alimentaire et se déplace en entier à travers le produit alimentaire (12) jusqu'au-delà du côté extérieur du produit alimentaire (12), pendant qu'il se déplace avec l'aliment dans la direction de transport (T).

10. Dispositif selon la revendication 9, **caractérisé en ce que** le mécanisme de déplacement (5) est configuré de telle manière que le mouvement de l'élément de coupe (4) à travers le produit alimentaire (12) est contrôlable indépendamment du mouvement de l'élément de coupe (4) dans la direction de transport (T).

11. Dispositif selon la revendication 9 ou 10, **caractérisé en ce qu**'aucune surface d'appui (13) pour le produit alimentaire (12) n'est prévue dans la zone de découpe (10) ou bien que le produit alimentaire (12) est guidé de telle manière que le produit alimentaire (12) se trouve à distance de la surface d'appui (13) dans la zone de découpe (10).

12. Dispositif selon au moins une des revendications 9 à 11, **caractérisé en ce qu**'une surface d'appui (13) du dispositif de transport (2, 2a, 2b) comporte un espace (11) dans lequel se trouve la zone de découpe, où, en particulier, soit

a) le dispositif de transport (2, 2a, 2b, 14) comprend deux moyens de transport (2a,b), en particulier des moyens de transports circulant (2a,b), la zone de découpe (10) étant prévue dans l'espace (11) entre les moyens de transport (2a,b),
b) soit le moyen de transport (2a,b) comprend une bande transporteuse circulante (2), qui est déviée dans la zone de découpe (10) de telle manière que l'espace (11) se forme dans la surface d'appui de la bande transporteuse (2).

13. Dispositif selon au moins une des revendication 9 ou 12, **caractérisé en ce que** le dispositif de transport (2, 2a, 2b) comprend un moyen de transport (2b) circulant, la zone de découpe (10) se trouvant en amont du moyen de transport (2b).

14. Dispositif selon au moins une des revendications précédentes 9 à 13, **caractérisé en ce que** le dispositif de découpe (3) comporte un contre-couteau (9) pour l'élément de coupe (4), déplaçable en particulier dans la direction de transport (T) et dans la direction opposée.

15. Dispositif selon au moins la revendication 12, **caractérisé en ce que** dans le cas a), les moyens de transport (2a,b) sont contrôlables indépendamment l'un de l'autre et la vitesse des deux moyens de transport (2a,b) est réglable indépendamment l'une de l'autre.

16. Dispositif selon au moins la revendication 12, **caractérisé en ce que** dans le cas a), au moins un moyen de transport (2a,b) prend la forme d'une bande de retour.

17. Dispositif selon au moins une des revendications 9 à 16, **caractérisé en ce que** le dispositif de transport (2, 2a, 2b) comprend un tube d'alimentation (14) en tant que premier moyen de transport, via lequel le produit alimentaire (12) est amené à un deuxième moyen de transport (2, 2a, 2b), et que la zone de découpe (10) se trouve en aval du tube (14) dans la direction de transport (T), de telle manière que le flux de produit ne repose pas sur le dispositif de transport (2, 2a, 2b) dans la zone de découpe (10).

18. Dispositif selon la revendication 17, **caractérisé en ce que** le tube (14) est extensible de manière télescopique, en particulier avec le mouvement de l'élément de coupe (4).

19. Dispositif selon au moins la revendication 17, **caractérisé en ce que** le tube (14) comporte une extrémité biseautée.

FIG. 1

FIG. 2

FIG. 3

FIG. 4

FIG. 5

FIG. 6

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 1462606 A
- GB 2337362 A
- EP 1767096 B1